# NEUE EUROPÄISCHE PATENTSCHRIFT

(11) **EP 0 215 856 B2**
(45) Veröffentlichungstag und Bekanntmachung des Hinweises auf die Entscheidung über den Einspruch: **22.12.1993**
(45) Hinweis auf die Patenterteilung: 27.04.1988
(21) Anmeldenummer: 86901767.3
(22) Anmeldetag: 27.03.1986
(51) Int. Cl.: B62D 33/02

(54) **VERBUNDELEMENT AUS ANEINANDER FESTLIEGENDEN PROFILELEMENTEN**
COMPOSITE PIECE MADE UP OF FIRMLY ATTACHED PROFILE COMPONENTS
ELEMENT DE CONNEXION EN ELEMENTS PROFILES FIXES LES UNS AUX AUTRES

(30) Priorität: 28.03.1985 DE 8509328 U
(43) Veröffentlichungstag der Anmeldung: 01.04.1987
(73) Patentinhaber: Alusuisse - Lonza Holding AG, 3965 Chippis (CH)
(72) Erfinder: FRANK, Simon, D-7708 Watterdingen (DE)
(74) Vertreter: Hiebsch, Gerhard F., Dipl.-Ing.
(86) Internationale Anmeldenummer: CH8600041
(87) Internationale Veröffentlichungsnummer: WO8605754

(56) Entgegenhaltungen:
- EP-A- 0 004 666
- DE-A- 1 804 822
- DE-A- 2 113 131
- DE-A- 3 112 365
- DE-B- 1 140 330
- FR-A- 1 531 599
- FR-A- 2 061 044
- FR-A- 2 125 088
- FR-A- 2 129 401
- GB-A- 1 111 627
- US-A- 3 160 249

## Beschreibung

Die Erfindung betrifft ein Verbundelement nach dem Oberbegriff des Anspruches 1.

Ein derartiges Verbundelement ist in der DE-A-31 12 365 beschrieben mit einem die Profilelemente klammernd verbindenden mehrteiligen Verbindungselement, das durch Keilflächen querschnittlich größenveränderbar ist, aber dem Wunsch nach einem völlig schweißfreien Verbundelement nicht gerecht wird; zur Vermeidung von Verlagerungen der Teile mit den Keilflächen sind Sicherungsschweißstellen erforderlich.

Ladebordwände wurden üblicherweise aus Stahlblechen oder aus Stahlprofilen zusammengeschweißt. Der Schweißvorgang selbst bedingte eine unerwünschte Unterbrechung des Fertigungsflusses, außerdem eine Vielzahl von Nachbehandlungen wie Richten, Putzen und Beschneiden. Stahlbordwände verkratzen beim Absetzen auf den Boden und bieten so Angriffsflächen für Rostentwicklung.

Dieser Mangel haftet auch Aluminiumkonstruktionen an, die gegenüber den Stahlbordwänden bis zu 20 % Gewichtsersparnis anbieten, darüber hinaus auch nach langem Einsatz ein gutes Ansehen behalten.

Der FR-A-1 531 599 ist ein Verbindungselement aus zwei Strängen, welche aus einem geschmeidigen und elastischen Werkstoff bestehen und jeweils mit Fahnen für den Anschluß an eine Konstruktion ausgestattet sind. Die beiden Stränge nehmen zwischen sich einen Schlauch auf, der über einen Anschluß aufgeblasen werden kann. Außer diesem elastischen und aufblasbaren Element zum Verbinden von Konstruktionsteilen ist aus dem Stande der Technik ein Bauteil aus plattenförmigen Leichtmetall- oder Kunststoffelementen nach DE-B-1140 330 bekannt, die durch hakenartig endende Stegpaare des einen Elementes und von diesen hintergriffenen Widerlagern des anderen Elementes miteinander verbunden zu werden vermögen. Jene zueinander parallelen Stegpaare werden von den Flanken einer angeformten Rinne angeboten, die durch einen eingelegten Materialstreifen zu einem Kastenprofil ergänzbar ist.

Angesichts dieser Gegebenheiten hat sich der Erfinder das Ziel gesetzt, ein Verbundelement -- und insbesondere Bordwände -- der eingangs erwähnten Art so auszugestalten, daß die Profilelemente bei einfacher Fertigung mittels des Verbindungselements einfachster Art fest und sicher miteinander verbunden werden können.

Eine Lösung der vom Erfinder gesehenen Aufgabe bietet die Lehre des unabhängigen Anspruches 1 an.

Dank dieser Maßgaben entsteht eine schweiß- und nietfrei hergestellte, auch mit größeren Lasten überfahrbare Ladebordwand, die sehr günstig zu fertigen ist.

Zum erzielten Vorzug verbesserter Verarbeitung bei geringerer Fertigungszeit, Einzelteil-Fertigung, geringen Fertigungsmitteln sowie geradlinigem Montagefluß tritt noch der folgende Vorteil hinzu: die entstehende Ladebordwand ist eloxierbar, was ein gutes Aussehen mit sich bringt.

All diese Vorzüge sind auch bei einem weiteren Ausführungsbeispiel zu erkennen, bei dem gleichförmige Profilabschnitte miteinander verbunden sind. Die Ausgestaltung ist den abhängigen Ansprüchen 2 bis 7 zu entnehmen, deren Merkmale erkennen lassen, in welch bestechender Weise die Formgebung eines einzigen stranggepressten Profils zu schweißlos kuppelbaren Elementen einer Bordwand führt.

Weitere Vorteile und Einzelheiten der Erfindung ergeben sich aus der nachfolgenden Beschreibung eines bevorzugten Ausführungsbeispiels sowie anhand der Zeichnung; diese zeigt schematisch in
- Fig. 1:: ein Hohlkammerprofil in geschnittener Schrägsicht;
- Fig. 2, 3:: jeweils zwei Hohlkammerprofile nach Fig. 1 in unterschiedlichen Stellungen während eines Verbindungsvorganges;
- Fig. 4:: die beiden Hohlkammerprofile nach dem Erreichen der endgültigen Kupplungsanlage.

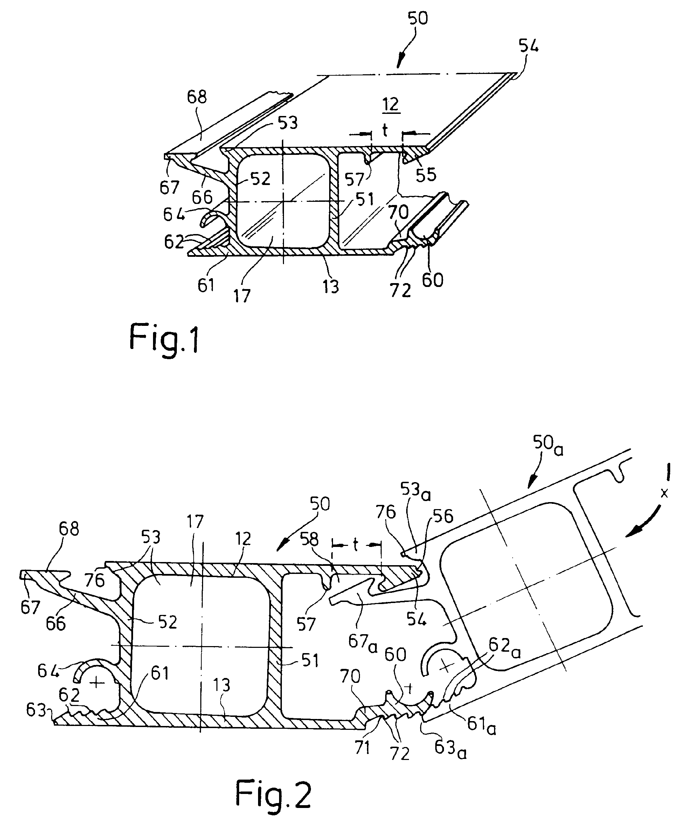

Bei einem Hohlkammerprofil 50 der Fig. 1 -- einer überfahrbaren Bordwand für einen nicht weiter dargestellten Lastwagenaufbau -- begrenzen parallele Profilwände 12, 13 mit Querwänden 51, 52 eine Kammer 17 beispielsweise quadratischen Querschnitts. Die obere Profilwand 12 endet auf der linken Seite der Fig. 1 als abgestufte Leiste 53 und anderseits als Hakenkante 54, deren freies Hakenende 55 in einem Abstand t einer Leiste 57 gegenübersteht.

Die untere Profilwand 13 endet gegenüber jener Hakenkante 54 an einem Rinnenprofil 60 und anderseits als Nase 61 mit Rippen oder Zähnen 62 an der Innenfläche. Oberhalb der Zähne 62 wölbt sich ein zu ihnen offener Rinnensteg 64 der Querwand 52, von letzterer ragt darüber in einem Neigungswinkel von 75° ein Armsteg 66 ab, dem eine Leiste 67 mit nach oben weisender, zur Profilwand 12 paralleler Oberfläche 68 angeformt ist.

Ein gleichgeformtes Hohlprofil 50 wird in Pfeilrichtung x der Fig. 2 mit seiner Leiste 67a in den Zwischenraum 58 zwischen Leiste 57 und Hakenende 55 eingeführt, wobei die freie Kante 63a der Nase 61a an der Außenseite des Rinnenprofils 60 entlanggleitet; ein das Rinnenprofil 60 mit der Profilwand 13 verbindender Stufenarm 70 ermöglicht es, daß die ihrerseits mit Rippen oder Zähnen 72 versehene Rückseite 71 des Rinnenprofils 60 gegenüber der Oberfläche 74 der unteren Profilwand 13 um ein Maß n zurückspringt, welches etwa der mittleren Dicke s der Nase 61 bzw. 61a entspricht.

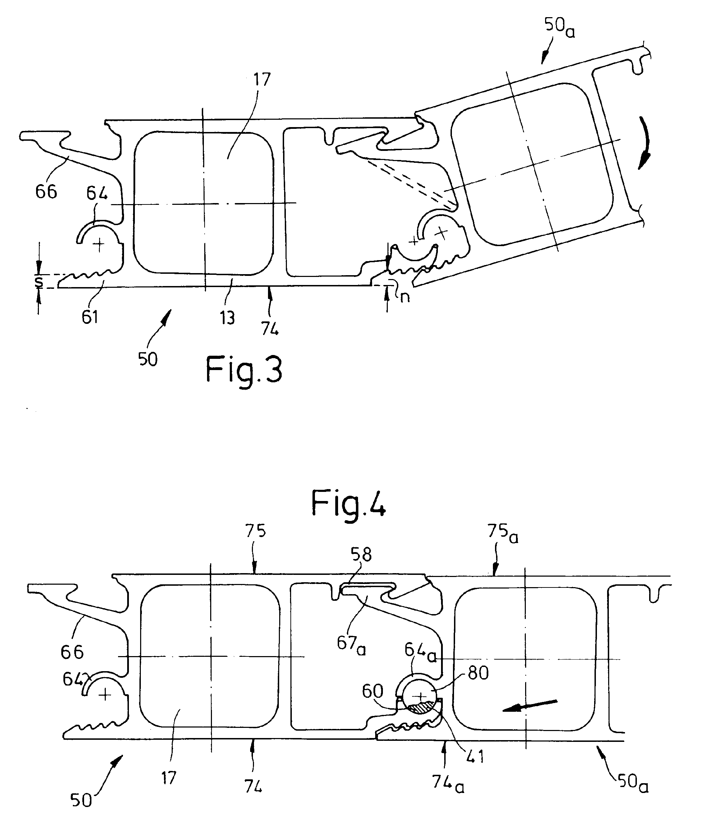

Fig. 4 läßt die beiden Hohlprofile 50, 50a in der endgültigen Kupplungslage erkennen (wegen der besseren Übersichtlichkeit sind die Profile leicht versetzt gezeichnet), in welcher die Oberflächen 74, 74a und 75, 75a der Profilwände 12, 13 miteinander fluchten. Dann sitzt die Leiste 67a im Zwischenraum 58 fest, und die Zähne 62a der Nase 61a greifen zwischen die Zähne 72 der Rückseite 71 des Rinnenprofils 60 ein. Dieses wird durch den Rinnensteg 64a des Hohlprofils 50a zu einem Rohrraum 80 für einen bei 41 angedeuteten Keil od.dgl. ergänzt, welcher den sicheren Sitz der Profile 50, 50a aneinander gewährleistet.

Insbesondere in Fig. 2 ist an der Hakenkante 54 eine Längsschulter 56 zu erkennen, in der in Kupplungslage nach Fig. 4 die Leiste 53a des Hohlprofils 50a mit einer Gegenschulter 76 festliegt.

In Fig. 3 ist am rechten Hohlprofil 50a zwischen dessen Rinnensteg 64 und dem Armsteg 66 ein weiterer Profilsteg mit gestrichelten Linien angedeutet, der bei besonderen Belastungsfällen als Stütze für die Leiste 67 vorgesehen werden kann. Wird in den von beiden Rinnennuten begrenzten Rohrraum 80 der bei 41 angedeuteter Keil, eine Spiralfeder oder ein entsprechendes Spreizelement eingeschoben, dann sind die beiden Hohlkammerprofile 50, 50a fest verbunden.

Bei einem in der Zeichnung nicht wiedergegebenen Ausführungsbeispiel der Erfindung können im Bereich der Kupplungspaarung an Profilrinnen 60/64 mit Spreizelement 41 auch ineinandergreifende Tannenbaumprofile vorgesehen sein, die sich beim Zusammenbau verhaken.

## Patentansprüche

1. Verbundelement aus stirnseitig aneinander festliegenden, stranggepreßten, hohlen Profilementen aus Aluminium bzw. einer Aluminiumlegierung mit zwei in Abstand zueinander verlaufenden Profilwänden (12, 13) mit wenigstens einer diese verbindenden Querwand (52), insbesondere eine überfahrbare Bordwand für Fahrzeugpritschen, wobei die Profilelemente (50, 50a) sowohl mit angeformten Hakenelementen (54, 67) ineinandergreifen als auch jeweils mit einer Nut (60, 64) versehen sind, welche in gekuppelter Lage der Profilelemente gemeinsam einen Aufnahmeraum (40, 80) für ein Spreizkräfte erzeugendes Verbindungselement (41) begrenzen,
dadurch gekennzeichnet,
daß die Profilelemente (50, 50a) so miteinander verbunden sind, daß im Bereich der einen Profilwand (12) die hakenartigen Elemente (54, 67) und im Bereich der anderen Profilwand (13) die Nuten vorgesehen sind, welche jeweils von einem Rinnenprofil (60 64) gebildet sind, von denen eines zur einen Profilwand (12) gerichtet sowie an seiner anderen Oberfläche (71) mit Längsrippen oder Zähnen (72) versehen ist, die mit Gegenzähnen (62) eines Vorsprunges (61) des Profilelements zusammenwirken, wobei sich die beiden Rinnenprofile (60, 64) an der Profilwand (13) bei ineinanderliegenden Zähnen (62,72) zu einem etwa zylindrischen Aufnahmeraum ergänzen.

2. Verbundelement nach Anspruch 1, dadurch gekennzeichnet, daß das eine Ende der anderen Profilwand (13) als Nase (61) über die Querwand (52) hinausragt und an einer Oberfläche mit Längsrippen oder Zähnen (62) versehen ist, denen in Abstand ein an die Querwand angeformtes und zu den Zähnen geöffnetes Rinnenprofil (64) gegenübersteht, das andere Ende der anderen Profilwand (13) aus dieser in einem Maß (n) schulterartig versetzt ist, welches etwa der Dicke (s) der Nase (61) des anderen Endes der Profilwand entspricht, wobei der schulterartig versetzte Teil (70) das andere Rinnenprofil (60) anbietet.

3. Verbundelement nach Anspruch 2, dadurch gekennzeichnet, daß die andere Profilwand (12) gegenüber dem schulterartig versetzten Teil (70) der ersten Profilwand (13) wenigstens eine zu dieser gerichtete Leiste (57) und eine zu letzterer geneigte Nasenanformung einer Hakenkante (54) als Begrenzung eines Zwischenraumes (58) aufweist, wobei das andere Ende der Profilwand gegebenenfalls als Schulterleiste (76) von der Querwand (52) des Profilelementes (50) abragt.

4. Verbundelement nach Anspruch 3, dadurch gekennzeichnet, daß von der Querwand (52) außerhalb des Rinnenprofils (64) wenigstens ein zu einer Profilwand (12) geneigter Armsteg (66) abragt, der in einem der Dicke jener Profilwand etwa entsprechenden Abstand von deren Oberfläche (75) als Leiste (67) endet, welche einen zur Querwand (52) weisenden Leistenvorsprung besitzt, dessen Abstand von der Schulterleiste (76) etwa dem Abstand des Zwischenraumes (58) vom benachbarten freien Ende der Profilwand (12) entspricht, wobei dieses Ende eine Längsschulter (56) aufweist, welcher eine Gegenschulter der Schulterleiste (76) eingepasst ist.

5. Verbundelement nach Anspruch 3 oder 4, dadurch gekennzeichnet, daß zwei miteinander verbundene Profilelemente (50, 50a) durch Paarungen Zwischenraum (58) / Leiste (67) einerseits und Rinnenprofile (60, 64) / Spreizelement (41) andererseits gehalten sind, wobei die beiden Rinnenprofile durch die ineinandergreifenden Zähne (62, 72) zueinander justiert sind.

6. Verbundelement nach einem der Ansprüche 1 bis 5, dadurch gekennzeichnet, daß die Oberflächen (74, 74a, 75, 75a) der Profilwände (12, 13) beider eingerasteter Profilelemente (50, 50a) miteinander lückenfrei fluchten.

7. Verbundelement nach Anspruch 1, dadurch gekennzeichnet, daß die Profilrinnen (60, 64) und das Verbindungselement (41) einen tannenbaumartigen Querschnitt aufweisen und in eingerastetem Zustand einander hintergreifen.

## Claims

1. Composite element composed of extruded, hollow sectional elements made of aluminium or an aluminium alloy, fixed to one another on their end face, having two section walls (12, 13), extending at a distance from one another, and having at least one transverse wall (52), connecting the said section walls, especially a drive-over tailboard for vehicle platforms, the sectional elements (50, 50a) both engaging in one another by means of formed-on hook elements (54, 67) and each being provided with a groove (60, 64), which grooves jointly limit a receiving space (40, 80) for a connecting element (41) generating spreading forces when the sectional elements are in the coupled position, characterized in that the sectional elements (50, 50a) are connected to one another in such a way that the hook-like elements (54, 67) are provided in the region of one section wall (12) and the grooves are provided in the region of the other section wall (13), which grooves are respectively formed by a trough section (60, 64), of which one is directed towards a section wall (12) and is provided on its other surface (71) with longitudinal ribs or teeth (72), which interact with counterteeth (62) of a projection (61) of the sectional element, the two trough sections (60, 64) on the section wall (13) completing one another to form an approximately cylindrical receiving space when the teeth (62, 72) are engaged in one another.

2. Composite element according to Claim 1, characterized in that one end of the other section wall (13) projects as a nose (61) beyond the transverse wall (52) and is equipped, on one surface, with longitudinal ribs or teeth (62), opposite which is located at a distance a trough section (64) formed on the transverse wall and open towards the teeth, and the other end of the other section wall (13) is offset from this in the manner of a shoulder by an amount (n) corresponding approximately to the thickness (s) of the nose (61) of the other end of the section wall, the part (70) offset in the manner of a shoulder offering the other trough section (60).

3. Composite element according to Claim 2, characterized in that the other section wall (12) has, opposite the part (70), offset in the manner of a shoulder, of the first section wall (13), at least one strip (57) directed towards the latter and a formed-on nose, inclined towards the said strip (57), of a hook edge (54) as the limitation for a gap (58), the other end of the section wall projecting, if appropriate, as a shoulder strip (76) from the transverse wall (52) of the sectional element (50).

4. Composite element according to Claim 3, characterized in that there projects from the transverse wall (52), outside the trough section (64), at least one arm web (66) which is inclined relative to a section wall (12) and which terminates at a distance from its surface (75) corresponding approximately to the thickness of the said section wall, as a strip (67) having a strip projection which points towards the transverse wall (52) and of which the distance from the shoulder strip (76) corresponds approximately to the distance between the gap (58) from the adjacent free end of the section wall (12), this end having a longitudinal shoulder (56), into which a countershoulder of the shoulder strip (76) is fitted.

5. Composite element according to Claim 3 or 4, characterized in that two sectional elements (50, 50a) connected to one another are retained by means of, on the one hand, gap (58) / strip (67) and, on the other hand, trough section (60, 64) / spreading element (41) pairings, the two trough sections being adjusted relative to one another by means of the teeth (62, 72) engaging in one another.

6. Composite element according to one of Claims 1 to 5, characterized in that the surfaces (74, 74a, 75, 75a) of the section walls (12, 13) of two engaged sectional elements (50, 50a) are aligned with one another continuously.

7. Composite element according to Claim 1, characterized in that the trough sections (60, 64) and the connecting element (41) have a cross-section in the manner of a pine tree and engage behind one another in the engaged state.

## Revendications

1. Elément composite composé d'éléments profilés creux, filés à la presse, solidarisés en appui frontal l'un contre l'autre, en aluminium ou alliage d'aluminium, comportant deux parois de profilé (12, 13) distantes l'une de l'autre et au moins une paroi transversale (52) les raccordant, notamment une ridelle relevable pour plate-formes de véhicules, les éléments profilés (50, 50a) s'emboîtant l'un dans l'autre par des éléments formant crochets (54, 67), venus de matière, et étant munis de rainures (60, 64) qui délimitent en combinaison, lorsque les éléments profilés sont accouplés, un logement (40, 80) destiné à un élément d'assemblage (41) produisant des forces d'expansion,
caractérisé en ce que
les éléments profilés (50, 50a) sont assemblés les uns aux autres de telle sorte que dans la zone d'une paroi (12) de profilé sont prévus les éléments en forme de crochet (54, 67) et dans la zone de l'autre paroi (13) de profilé les rainures formées chacune par un profil de rigole (60, 64) dont l'un est orienté en direction d'une paroi (12) du profilé et est doté sur son autre surface (71) de nervures longitudinales ou de dents (72) qui coopèrent avec des dents antagonistes (62) d'une partie saillante (61) de l'élément profilé, les deux profils de rigole (60, 64) de la paroi (13) du profilé se complétant, lorsque les dents (60, 72) sont engagées les unes dans les autres, pour former un logement quasi cylindrique.

2. Elément composite selon la revendication 1, caractérisé en ce qu'une extrémité de l'autre paroi (13) du profilé fait saillie au-delà de la paroi transversale (52) pour former un mentonnet (61) et est munie sur une surface de nervures longitudinales ou de dents (62) en face desquelles se trouve, à une certaine distance, un profil de rigole (64) venu de matière sur la paroi transversale et qui dirige son ouverture vers les dents, l'autre extrémité de l'autre paroi (13) du profilé est décalée par rapport à celle-ci, en formant un épaulement, sur une distance (n) qui correspond à peu près à l'épaisseur (s) du mentonnet (61) de l'autre extrémité de la paroi du profilé, la partie (70) décalée en formant un épaulement constituant l'autre profil de rigole (60).

3. Elément composite selon la revendication 2, caractérisé en ce que l'autre paroi (12) du profilé présente, face à la partie (70) décalée, formant un épaulement, de la première paroi (13) du profilé au moins une nervure (57) dirigée vers celle-ci et un talon, incliné vers cette dernière, d'une arête en forme de crochet (54) constituant la délimitation d'un intervalle (58), l'autre extrémité de la paroi du profilé dépassant le cas échéant sous forme de nervure à épaulement (76) de la paroi transversale (52) de l'élément profilé (50).

4. Elément composite selon la revendication 3, caractérisé en ce qu'au moins une aile (66) formant bras, inclinée en direction d'une paroi (12) du profilé dépasse de la paroi transversale (52) à l'extérieur du profil de rigole (64) et se termine à une distance de la surface (75) de cette paroi de profilé correspondant à peu près à son épaisseur, sous la forme d'une nervure (67) qui possède une saillie de nervure pointant vers la cloison transversale (52) et dont la distance par rapport à la nervure à épaulement (76) correspond à peu près à la distance qui sépare l'intervalle (58) de l'extrémité libre voisine de la paroi (12) du profilé, cette extrémité présentant un épaulement longitudinal (56) qui est engagé dans un contre-épaulement de la nervure à épaulement (76).

5. Elément composite selon la revendication 3 ou 4, caractérisé en ce que deux éléments profilés (50, 50a), assemblés l'un à l'autre, sont maintenus par des combinaisons intervalle (58)/nervure (67) d'une part et profils de rigole (60, 64)/élément d'expansion (41), les deux profils de rigole étant ajustés l'un à l'autre par les dents (62, 72) s'engageant les unes dans les autres.

6. Elément composite selon l'une des revendications 1 à 5, caractérisé en ce que les surfaces (74, 74a, 75, 75a) des parois (12, 13) des deux éléments profilés (50, 50a) encliquetés l'un dans l'autre sont alignées sans solution de continuité.

7. Elément composite selon la revendication 1, caractérisé en ce que les rigoles profilées (60, 64) et l'élément d'assemblage (41) présentent une section en forme de sapin et s'accrochent l'un derrière l'autre à l'état encliqueté.
